# EUROPÄISCHE PATENTANMELDUNG

(11) **EP 4 506 112 A1**
(43) Veröffentlichungstag der Anmeldung: **12.02.2025**
(21) Anmeldenummer: 24193672.3
(22) Anmeldetag: 08.08.2024
(51) Int. Cl.: B25J 9/10, B25J 9/12, B25J 17/00, B25J 19/00, B25J 19/02, B25J 19/06

(54) **MOTORISIERTES GELENK FÜR EINEN PROGRAMMIERBAREN BEWEGUNGSAUTOMATEN**

(30) Priorität: 11.08.2023 LU 504901
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein motorisiertes Gelenk zum Verbinden von zwei relativ zueinander beweglichen Trägern eines programmierbaren Bewegungsautomaten, das eine schaltbare Feststellvorrichtung aufweist, die dazu ausgebildet und angeordnet ist, das motorisierte Gelenk im zugeschalteten Zustand zu arretieren und in einem Freigabezustand nicht zu arretieren. Das motorisierte Gelenk zeichnet sich dadurch aus, dass die Feststellvorrichtung, insbesondere in Tangentialrichtung, federelastisch beweglich befestigt ist.

## Beschreibung

Die Erfindung betrifft ein motorisiertes Gelenk zum Verbinden von zwei relativ zueinander beweglichen Trägern eines programmierbaren Bewegungsautomaten, das eine schaltbare Feststellvorrichtung aufweist, die dazu ausgebildet und angeordnet ist, das motorisierte Gelenk im zugeschalteten Zustand zu arretieren und in einem Freigabezustand nicht zu arretieren.

Die Erfindung betrifft darüber hinaus einen programmierbaren Bewegungsautomaten mit einem solchen motorisierten Gelenk.

Ein motorisiertes Gelenk der eingangs genannten Art ist beispielsweise aus der internationalen Patentanmeldung WO 2017 186 844 A1 bekannt. Ein solches motorisiertes Gelenk hat den Nachteil, dass die Träger des programmierbaren Bewegungsautomaten, die über das motorisierte Gelenk miteinander verbunden sind, relativ zueinander vollkommen unbeweglich sind, wenn die Feststellvorrichtung in den zugeschalteten Zustand geschaltet ist. Um beispielsweise nach einer Notabschaltung, bei der die Feststellvorrichtung in den zugeschalteten Zustand geschaltet wurde, einen versehentlich eingeklemmten Gegenstand oder eine versehentlich eingeklemmte Person kurzfristig befreien zu können, ist es notwendig, zunächst die Feststellvorrichtung in den Freigabezustand zurückzuschalten, was jedoch voraussetzt, dass zuvor für eine externe Abstützung der Träger gesorgt wird.

Aus EP 3 445 542 B1 ist ein motorisiertes Gelenk zum Verbinden von zwei relativ zueinander beweglichen Trägern eines programmierbaren Bewegungsautomaten bekannt, das einen Antriebsmotor und ein dem Antriebsmotor triebtechnisch nachgeschaltetes Getriebe sowie eine Feststellvorrichtung aufweist, wobei das Getriebe ein drehfest mit einer Abtriebswelle des Antriebsmotors verbundenes Antriebselement, wenigstens ein Zwischenelement, das eine andere Drehgeschwindigkeit aufweist, als das Antriebselement, sowie ein Abtriebselement aufweist, wobei die Feststellvorrichtung dazu ausgebildet und angeordnet ist, unmittelbar das Zwischenelement, das Abtriebselement oder ein drehfest mit dem Zwischenelement oder dem Abtriebselement verbundenes Bauteil abzubremsen und zu arretieren, und wobei die Feststellvorrichtung ein reibschlüssig mit dem Zwischenelement, dem Abtriebselement oder dem drehfest mit dem Zwischenelement oder dem Abtriebselement verbundenen Bauteil verbundenes Sperrmittel aufweist, welches wenigstens ein Formschlussmittel aufweist, das im zugeschalteten Zustand der Feststellvorrichtung formschlüssig mit einem relativ zu einem Gehäuse oder einem Chassis drehfesten Gegenformschlussmittel zusammen wirkt. Zum Erzeugen oder zum Erhöhen der Reibkraft ist ein einstellbares Vorspannmittel oder ein Vorspannmittel, das eine Tellerfeder oder ein gewelltes und/oder elastisches und/oder zylinderförmig gebogenes Band insbesondere Blechband, oder einen geschlitzten Ring aufweist, vorhanden.

Es ist daher die Aufgabe der vorliegenden Erfindung, ein motorisiertes Gelenk anzugeben, dass es ermöglicht, nach einem Umschalten der Feststellvorrichtung in den zugeschalteten Zustand schnell und unkompliziert Eingriffe an einem mit dem motorisierten Gelenk ausgerüsteten programmierbaren Bewegungsautomaten vornehmen zu können.

Die Aufgabe wird durch ein motorisiertes Gelenk gelöst, das dadurch gekennzeichnet ist, dass die Feststellvorrichtung federelastisch beweglich befestigt ist.

Die Erfindung hat den ganz besonderen Vorteil, dass die Träger eines programmierbaren Bewegungsautomaten, die mittels des erfindungsgemäßen motorisierten Gelenks miteinander verbunden sind, auch nach einem Umschalten der Feststellvorrichtung in den zugeschalteten Zustand durch Aufwendung einer äußeren Kraft in begrenztem Umfang relativ zueinander beschädigungsfrei elastisch bewegt werden können, beispielsweise um Gegenstände, die versehentlich von dem programmierbaren Bewegungsautomaten eingeklemmt wurden, unkompliziert befreien zu können. Dies wird dadurch erreicht, dass die Feststellvorrichtung, insbesondere eine weiter unten im Detail beschriebene Betätigungsvorrichtung der Feststellvorrichtung, einer äußeren Kraft, die auf den Träger eines programmierbaren Bewegungsautomaten ausgeübt wird, gegen eine Rückstellkraft folgen kann und so eine Bewegung des Trägers zulässt.

Vorzugsweise weist eine Federvorrichtung, mittels der die Feststellvorrichtung, insbesondere eine weiter unten im Detail beschriebene Betätigungsvorrichtung der Feststellvorrichtung, relativ zu einem anderen Bauteil des motorisierten Gelenks federelastisch beweglich befestigt ist, eine geringere Steifigkeit auf, als die sich im Antriebsstrang befindlichen Bauteile eines das motorisierte Gelenk antreibenden Aktuators. Auf diese Weise wird vorteilhaft erreicht, dass die Bauteile im Antriebsstrang des Aktuators durch die Federvorrichtung vor einer Beschädigung durch übermäßige äußere Kraft- und/oder Drehmomenteinwirkung geschützt werden.

Die Erfindung hat den zusätzlichen Nebenvorteil, dass die sich im Antriebsstrang befindlichen Bauteile eines das motorisierte Gelenk antreibenden Aktuators bei einem Umschalten der Feststellvorrichtung in den zugeschalteten Zustand vor hohen Belastungsspitzen geschützt sind, weil ein Teil der aufgrund der Massenträgheit der Träger vorhandenen kinetischen Energie unmittelbar nach dem Herstellen des zugeschalteten Zustandes (beispielsweise indem ein Sperrenstift in eine Ausnehmung eines zu arretierenden Bauteils eingreift) zunächst von der Federvorrichtung in Form von Spannenergie aufgenommen wird.

Bei einer vorteilhaften Ausführung weist das motorisierte Gelenk zwei Gelenkgrundträger auf, die beweglich, insbesondere dreh- oder schwenkbeweglich, miteinander verbunden sind. Die Gelenkgrundträger sind vorzugsweise dazu ausgebildet, als statische Grundbauteile zu fungieren, an denen Bauteile des motorisierten Gelenks befestigt sind. Vorzugsweise ist das motorisierte Gelenk derart ausgebildet, dass die Gelenkgrundträger im Freigabezustand der Feststellvorrichtung mittels eines Antriebsmotors, dem ein Getriebe nachgeschaltet sein kann, relativ zueinander frei bewegt werden können, während sie im zugeschalteten Zustand der Feststellvorrichtung relativ zueinander nur noch gegen eine Rückstellkraft und/oder ein Rückstellmoment (aufgrund der federelastischen Befestigung der Feststellvorrichtung) bewegt werden können.

Die Feststellvorrichtung kann direkt oder indirekt an einem der Gelenkgrundträger federelastisch beweglich befestigt sein.

Bei einer ganz besonders vorteilhaften Ausführung ist wenigstens einer der Gelenkgrundträger als Gehäuseteil ausgebildet. Eine solche Ausführung hat den ganz besonderen Vorteil, dass der Gelenkgrundträger eine Doppelfunktion wahrnehmen kann, nämlich einerseits die Funktion, als statisches Grundelement zu fungieren, an dem weitere Bauteile und/der ein Träger eines programmierbaren Bewegungsautomaten befestigt sein können, und andererseits die weitere Funktion, Bauteile, insbesondere empfindliche Bauteile des motorisierten Gelenks, einzuhausen, mit dem Vorteil, dass diese vor Beschädigung und/oder Verschmutzung geschützt untergebracht sind. Insbesondere kann ein Aktuator, der einen Antriebsmotor und ein dem Antriebsmotor triebtechnisch nachgeschaltetes Getriebe aufweist, in einem oder beiden Gehäuseteilen untergebracht sein.

Insbesondere kann vorteilhaft vorgesehen sein, dass ein Antriebsmotor in einem der Gehäuseteile angeordnet ist, während ein Getriebe, insbesondere ein Spannungswellengetriebe oder ein Planetengetriebe, in dem anderen Gehäuseteil angeordnet ist. Alternativ oder zusätzlich kann auch vorgesehen sein, dass ein Teil des Getriebes in einem der Gehäuseteile angeordnet ist und ein anderer Teil des Getriebes in dem anderen Gehäuseteil angeordnet ist, oder dass die Feststellvorrichtung in demselben Gehäuseteil angeordnet ist, wie der Antriebsmotor. Diese Ausführungen haben den besonderen Vorteil, dass die Gehäuseteile symmetrisch und/oder baugleich und/oder gleich groß ausgebildet sein können. Insbesondere ist es nicht erforderlich, dass einer der Gelenkteile besonders klobig ausgebildet ist, weil er sämtliche Elemente eines Aktuators, insbesondere sowohl des Antriebsmotors, als auch des Getriebes, beispielsweise Spannungswellengetriebes, und der Feststellvorrichtung, aufnehmen muss.

Ein ganz besonderer Vorteil einer solchen Ausführung besteht darin, dass die Ebenen, innerhalb denen sich die Längsmittelachsen der Träger bewegen, einen geringeren Abstand zueinander aufweisen können. Dies hat den weiteren besonderen Vorteil, dass im Betrieb wenigstens auf einen der Träger ein geringeres Torsionsmoment einwirkt. Der Träger kann daher filigraner und/oder bauraumsparender dimensioniert werden.

Insbesondere kann ein Gehäuseteil dazu ausgebildet und angeordnet sein, starr direkt oder indirekt mit einem der Träger verbunden zu werden, während das andere Gehäuseteil dazu ausgebildet und angeordnet ist, starr mit dem anderen Träger verbunden zu werden. Es ist alternativ auch möglich, dass ein Gehäuse eines ersten Trägers zusätzlich auch als ein erstes Gehäuseteil des motorisierten Gelenks fungiert und/oder dass ein Gehäuse eines zweiten Trägers zusätzlich auch als zweites Gehäuseteil des motorisierten Gelenks fungiert.

Wie bereits erwähnt, kann wenigstens einer der Gelenkgrundträger zur Ankopplung eines Trägers eines programmierbaren Bewegungsautomaten ausgebildet sein. Beispielsweise kann vorteilhaft vorgesehen sein, dass ein Träger eines programmierbaren Bewegungsautomaten an einen der Gelenkgrundträger angeschraubt wird. Hinsichtlich der Art der Befestigung gibt es jedoch keine grundsätzlichen Beschränkungen. Vielmehr ist eine stoffschlüssige, kraftschlüssige und/oder formschlüssige Befestigung eines Trägers eines programmierbaren Bewegungsautomaten an einem der Gelenkgrundträger möglich. Alternativ ist es auch möglich, dass wenigstens einer der Gelenkgrundträger gemeinsam einstückig mit einem Träger eines programmierbaren Bewegungsautomaten ausgebildet ist. Eine solche Ausführung eines programmierbaren Bewegungsautomaten kommt mit wenigen Bauteilen aus und kann besonders kompakt ausgebildet werden.

Die Feststellvorrichtung kann beispielsweise als Sperre oder als Bremse ausgebildet sein.

Bei einer ganz besonders vorteilhaften Ausführung weist die Feststellvorrichtung eine Betätigungsvorrichtung und ein mittels der Betätigungsvorrichtung bewegliches Wirkmittel auf, welches im zugeschalteten Zustand in formschlüssigem oder reibschlüssigem Eingriff mit einem Gegenwirkmittel steht und im Freigabezustand mit dem Gegenwirkmittel nicht in Eingriff steht. Die Betätigungsvorrichtung kann beispielsweise einen Elektromagneten beinhalten, mittels dem das Wirkmittel, insbesondere gegen die Rückstellkraft eines mechanischen Energiespeichers (beispielsweise einer Feder), zur Bewegung angetrieben werden kann.

Das Gegenwirkmittel ist nicht Bestandteil der Feststellvorrichtung. Das Gegenwirkmittel kann an einem mittels der Feststellvorrichtung unmittelbar arretierbaren Bauteil, beispielsweise einer Welle oder einem Zahnrad, ausgebildet sein oder in Form eines Sperrmittels an einem mittels der Feststellvorrichtung unmittelbar arretierbaren Bauteil, beispielsweise einer Welle oder einem Zahnrad, angeordnet, insbesondere befestigt, sein.

Insbesondere kann das Wirkmittel als, insbesondere linear und/oder radial, verschiebbarer Sperrenstift oder als, insbesondere schwenkbar gelagerte, Klinke ausgebildet sein. Beispielsweise kann vorgesehen sein, dass der Sperrenstift oder die Klinke elektromagnetisch bewegt wird. Dies kann beispielsweise in der Form realisiert sein, dass der Sperrenstift bzw. die Klinke permanentmagnetisch ausgebildet ist oder einen Permanentmagneten aufweist und dass die Feststellvorrichtung eine Spule aufweist, mittels der eine Kraft auf den Sperrenstift bzw. die Klinke ausübbar ist.

Bei einer besonders sicheren Ausführung wird der Sperrenstift bzw. die Klinke von einem Elektromagneten gegen die Kraft eines mechanischen Energiespeichers, beispielsweise einer Energiespeicher-Feder, in dem Freigabezustand gehalten. Bei dieser Ausführung erfolgt ein Umschalten in den zugeschalteten Zustand, indem der Elektromagnet ausgeschaltet wird, so dass der Sperrenstift bzw. die Klinke mittels der Energie des mechanischen Energiespeichers derart bewegt wird, dass er bzw. sie in Eingriff mit dem Gegenwirkmittel kommt. Ähnliches lässt sich analog vorteilhaft auch realisieren, wenn die Feststellvorrichtung als reibschlüssige Bremse ausgebildet ist oder eine reibschlüssige Bremse aufweist.

Das Gegenwirkmittel kann insbesondere als Ausnehmung ausgebildet sein. Insbesondere können mehrere Gegenwirkmittel vorhanden sein, so dass es für das Wirkmittel mehrere Möglichkeiten des Eingriffs gibt. Beispielsweise können mehrere Ausnehmungen auf dem Umfang oder der Stirnseite des zu arretierenden Bauteils oder eines Sperrmittels, das mit dem zu arretierenden Bauteil drehfest verbunden ist, vorhanden sein.

Das Gegenwirkmittel, in das das Wirkmittel im zugeschalteten Zustand der Feststellvorrichtung eingreift, kann vorteilhaft beispielsweise an einem Getriebebauteil des Getriebes oder an einer Abtriebswelle des Antriebsmotors ausgebildet sein. Alternativ kann ein starr mit einem Getriebebauteil des Getriebes oder mit einer Abtriebswelle des Antriebsmotors verbundenes Sperrmittel das Gegenwirkmittel aufweisen.

Bei einer vorteilhaften Ausführung ist das Sperrmittel starr mit einem zu arretierenden Bauteil verbunden. Beispielsweise kann das Sperrmittel reibschlüssig, insbesondere mittels eines Klemmrings, und/oder formschlüssig und/oder stoffschlüssig mit dem zu arretierenden Bauteil verbunden sein. Mittels einer reibschlüssigen Verbindung kann vorteilhaft eine Rutschkupplung realisiert sein, um den Aktuator vor einer Beschädigung durch Überlastung zu schützen.

Alternativ kann das Sperrmittel federelastisch beweglich mit einem zu arretierenden Bauteil verbunden sein. Eine solche Ausführung hat den ganz besonderen Vorteil, dass zusätzlich zu der federelastischen Beweglichkeit der Feststellvorrichtung eine weitere federelastische Beweglichkeit des Sperrmittels vorhanden ist, um die Träger eines programmierbaren Bewegungsautomaten, die mittels des erfindungsgemäßen motorisierten Gelenks miteinander verbunden sind, auch nach einem Umschalten der Feststellvorrichtung in den zugeschalteten Zustand durch Aufwendung einer äußeren Kraft in begrenztem Umfang relativ zueinander beschädigungsfrei elastisch bewegen zu können.

Die Feststellvorrichtung kann, wie bereits erwähnt, auch als reibschlüssige Bremse ausgebildet sein oder eine reibschlüssige Bremse aufweisen. Auch hierbei kann vorgesehen sein, dass die Bremse unmittelbar auf das zu arretierende Bauteil, beispielsweise die Antriebswelle des Getriebes oder die Abtriebswelle des Antriebsmotors, wirkt oder dass die Bremse auf ein Sperrmittel wirkt, das reibschlüssig, insbesondere mittels eines Klemmrings, und/oder formschlüssig und/oder stoffschlüssig mit dem zu arretierenden Bauteil verbunden ist.

Das mittels der Feststellvorrichtung arretierbare Bauteil kann beispielsweise ein Antriebskern eines Wellengenerators eines Spannungswellengetriebes oder eine Abtriebswelle des Antriebsmotors, die drehfest mit dem Antriebskern des Spannungswellengetriebes verbunden ist, sein. Bei einer solchen Ausführung ist es möglich, die Träger eines programmierbaren Bewegungsautomaten, die mittels des motorisierten Gelenks miteinander verbunden sind, auch nach einem Umschalten der Feststellvorrichtung in den zugeschalteten Zustand durch Aufwendung einer äußeren Kraft in begrenztem Umfang relativ zueinander beschädigungsfrei elastisch zu bewegen, wobei das Spannungswellengetriebe zurückgetrieben wird, soweit die federelastische Beweglichkeit der Feststellvorrichtung dies zulässt. Wenn bei einer solchen Ausführung auf den zu bewegenden Träger eine Kraft bzw. ein Drehmoment ausgeübt wird, wirkt hiervon auf die Feststellvorrichtung eine um das Übersetzungsverhältnis des Getriebes reduzierte Kraft bzw. ein um das Übersetzungsverhältnis des Getriebes reduziertes Drehmoment. Bei einer solchen Ausführung kann die die Feststellvorrichtung haltende Federvorrichtung vorteilhaft zum Ausführen eines (beispielsweise im Vergleich zu einer Ausführung, bei der das zu arretierende Bauteil ein Flexspline oder ein Circularspline oder ein Dynamicspline ist) längeren elastischen Verformungswegs und/oder eines größeren elastischen Torsionswinkels ausgebildet sein, da der Weg bzw. der Rotationswinkel des durch äußere Kraft- und/oder Drehmomenteinwirkung bewegten Trägers eine um das Übersetzungsverhältnis des Getriebes vergrößerte Bewegung des Antriebskerns des Wellengenerators und der mit dem Antriebskern drehfest verbundenen Abtriebswelle bewirkt.

Das mittels der Feststellvorrichtung arretierbare Bauteil kann alternativ beispielsweise ein Flexspline des Spannungswellengetriebes sein. Es ist auch möglich, dass das mittels der Feststellvorrichtung arretierbare Bauteil ein Circularspline oder ein Dynamicspline des Spannungswellengetriebes ist.

Das mittels der Feststellvorrichtung arretierbare Bauteil kann ganz allgemein eine Abtriebswelle des Antriebsmotors sein, unabhängig davon, mit welchem Bauteil des Spannungswellengetriebes die Abtriebswelle des Antriebsmotors triebtechnisch mittelbar oder unmittelbar verbunden ist. Insbesondere kann das mittels der Feststellvorrichtung arretierbare Bauteil ein Bauteil sein, dass direkt oder indirekt fest mit der Abtriebswelle des Antriebsmotors verbunden ist.

Das motorisierte Gelenk kann, wie bereits erwähnt, einen Aktuator beinhalten, der einen Antriebsmotor und ein dem Antriebsmotor triebtechnisch nachgeschaltetes Getriebe beinhaltet.

Das Getriebe kann, wie ebenfalls bereits erwähnt, beispielsweise als Spannungswellengetriebe ausgebildet sein. Hinsichtlich der Bauform des Spannungswellengetriebes gibt es keine grundsätzlichen Beschränkungen.

Das Spannungswellengetriebe kann beispielsweise als Topfgetriebe ausgebildet sein. Bei einer solchen Ausführung kann der Flexspline an einem Ende einen radial nach innen gerichteten Boden aufweisen, während das andere Ende des Flexsplines die Flexsplineverzahnung aufweist.

Das Spannungswellengetriebe kann alternativ als Hutgetriebe ausgebildet sein. Bei einer solchen Ausführung kann der Flexspline an einem Ende einen ringförmigen, radial nach außen gerichteten Kragen aufweisen, während das andere Ende des Flexsplines die Flexsplineverzahnung aufweist.

Das Spannungswellengetriebe kann alternativ als Ringgetriebe ausgebildet sein. Bei einer solchen Ausführung kann der Flexspline im Wesentlichen aus einer radialflexiblen Hülse mit einer Flexsplineverzahnung bestehen. Bei einer solchen Ausführung können ein Dynamicspline und ein Circularspline vorhanden sein, die beide jeweils eine Verzahnung aufweisen, die mit der Flexsplineverzahnung an mindestens zwei Stellen in Zahneingriff stehen.

Vorzugsweise können die Gelenkgrundträger mittels des Aktuators relativ zueinander motorisch bewegt werden. Hierzu kann beispielsweise einer der Gelenkgrundträger direkt oder indirekt drehfest mit einem Getriebebauteil des Getriebes verbunden sein, während der andere Gelenkgrundträger direkt oder indirekt drehfest mit einem anderen Getriebebauteil des Getriebes verbunden ist. Alternativ kann beispielsweise auch ein Gelenkgrundträger direkt oder indirekt drehfest mit einem Antriebsmotorgehäuse des Antriebsmotors verbunden sein, während der andere Gelenkgrundträger direkt oder indirekt drehfest mit einem anderen Getriebebauteil des Getriebes verbunden ist.

Bei einer ganz besonders vorteilhaften Ausführung stützt sich ein Stator des Antriebsmotors direkt oder indirekt an einem der Gelenkgrundträger ab. In vorteilhafter Weise kann hierbei zusätzlich vorgesehen sein, dass sich die Feststellvorrichtung, insbesondere die Betätigungsvorrichtung der Feststellvorrichtung, im zugeschalteten Zustand direkt oder indirekt federelastisch an demselben Gelenkgrundträger abstützt. Eine solche Ausführung ist ganz besonders robust und zuverlässig ausbildbar.

Bei einer vorteilhaften Ausführung ist die Feststellvorrichtung Teil eines Zwischenbauteils, welches seinerseits, beispielsweise direkt oder indirekt, an einem der Gelenkgrundträger, federelastisch beweglich befestigt ist. Eine solche Ausführung ermöglicht eine besonders kompakte Bauweise.

Das Zwischenbauteil kann beispielsweise als eine Platine ausgebildet sein, die elektrische und/oder elektronische Bauteile, insbesondere elektrische und/oder elektronische Bauteile zur Steuerung des Antriebsmotors und/oder der Feststellvorrichtung, trägt. Hierbei können vorteilhaft zu der Platine und/oder zu den elektrischen und/oder elektronischen Bauteilen verlaufende elektrische Leitungen flexibel ausgebildet sein, so dass sie eine Bewegung des Zwischenbauteils nicht behindern und durch eine Bewegung des Zwischenbauteils nicht beschädigt werden.

Vorzugsweise ist die Feststellvorrichtung mittels einer Federvorrichtung, beispielsweise direkt oder indirekt an einem der Gelenkgrundträger, direkt oder indirekt federelastisch beweglich befestigt.

Hinsichtlich der Ausführung der Federvorrichtung gibt es keine grundsätzlichen Beschränkungen.

Die Federvorrichtung kann wenigstens eine metallische Feder beinhalten. Alternativ oder zusätzlich kann die Federvorrichtung eine nichtmetallische Feder, insbesondere eine Luftfeder oder eine Elastomerfeder oder eine Gasdruckfeder, beinhalten.

Die Federvorrichtung kann vorteilhaft wenigstens teilweise aus Stahl, insbesondere aus Federstahl, gefertigt sein. Eine solche Ausführung hat den Vorteil, dass sie ganz besonders langlebig und robust ausgebildet werden kann.

Alternativ oder zusätzlich kann vorteilhaft vorgesehen sein, dass die Federvorrichtung wenigstens teilweise aus Kunststoff, insbesondere aus einem Elastomer-Kunststoff, gefertigt ist. Die Verwendung eines Elastomer-Kunststoffs hat den ganz besonderen Vorteil, dass außer einer Elastizität der Federvorrichtung in einfacher Weise zusätzlich auch eine Dämpfung, durch Umsetzung eines Teils der eingetragenen Energie in Wärmeenergie innerhalb des Elastomer-Kunststoffs, realisiert werden kann.

Bei einer besonderen Ausführung ist ein Gehäuse der Feststellvorrichtung in einem Elastomer-Körper gelagert, der seinerseits an einem der Gelenkgrundträger befestigt ist. Insbesondere kann hierbei vorteilhaft vorgesehen sein, dass der Elastomer-Körper wenigstens einen Teil des Gehäuses der Feststellvorrichtung formschlüssig umgibt.

Bei einer besonders zuverlässigen Ausführung ist die Federvorrichtung einstückig aus einem einzigen Stück Rohmaterial gefertigt. Es ist alternativ jedoch durchaus auch möglich, dass die Federvorrichtung aus mehreren Federvorrichtungsbauteilen zusammengesetzt ist, beispielsweise um die Federvorrichtung an vorgegebene Bauraumverhältnisse anzupassen und/oder um besondere Federeigenschaften der Federvorrichtung zu realisieren.

Die Federvorrichtung kann einen ersten Ankoppelabschnitt aufweisen, der starr mit der Feststellvorrichtung, insbesondere mit der Betätigungsvorrichtung der Feststellvorrichtung, verbunden ist. Außerdem kann die Federvorrichtung einen zweiten Ankoppelabschnitt aufweisen, der starr mit einem der Gelenkgrundträger verbunden ist.

Bei einer besonders vorteilhaften Ausführung ist die Betätigungsvorrichtung der Feststellvorrichtung in Tangentialrichtung federelastisch beweglich, insbesondere an einem der Gelenkgrundträger, befestigt. Zusätzlich kann vorgesehen sein, dass die Betätigungsvorrichtung der Feststellvorrichtung, insbesondere an einem der Gelenkgrundträger, in Radialrichtung und/oder in Axialrichtung federelastisch beweglich befestigt ist. Bei einer besonders robusten Ausführung ist die Betätigungsvorrichtung der Feststellvorrichtung in Tangentialrichtung federelastisch beweglich, insbesondere an einem der Gelenkgrundträger, befestigt, während sie gleichzeitig, insbesondere an einem der Gelenkgrundträger, in Radialrichtung und/oder in Axialrichtung unbeweglich befestigt ist, was beispielsweise durch eine Führungsvorrichtung erreicht werden kann, die eine Bewegung in Tangentialrichtung zulässt, jedoch eine Bewegung in Radialrichtung und/oder in Axialrichtung nicht zulässt.

Bei einer ganz besonders vorteilhaften Ausführung ist ein Sensor, insbesondere ein Drehwinkelsensor, vorhanden, der eine Bewegung der Feststellvorrichtung, insbesondere eine Bewegung der Betätigungsvorrichtung der Feststellvorrichtung, relativ zu einem anderen Bauteil des motorisierten Gelenks, insbesondere relativ zu einem der Gelenkgrundträger, detektiert. Insbesondere kann vorteilhaft vorgesehen sein, dass der Sensor das Ausmaß der federelastischen Bewegung erfasst. Diese Ausführungen haben den ganz besonderen Vorteil, dass eine Belastung des motorisierten Gelenks qualitativ und/oder quantitativ erfasst werden kann. Der Sensor kann vorteilhaft beispielsweise als optischer Sensor ausgebildet sein. Beispielsweise kann der Sensor alternativ als induktiver oder als magnetostriktiver Sensor ausgebildet sein. Allerdings gibt es hinsichtlich der Ausbildung des Sensors keine grundsätzlichen Beschränkungen.

Bei einer vorteilhaften Ausführung weist der Aktuator ein Aktuatorgehäuse auf, wobei vorteilhafter Weise auch die Feststellvorrichtung in dem Aktuatorgehäuse angeordnet sein kann. Eine solche Ausführung hat den ganz besonderen Vorteil, dass die Feststellvorrichtung besonders gut vor Verschmutzung und Beschädigung geschützt untergebracht ist. Eine solche Ausführung hat außerdem den ganz besonderen Vorteil, dass eine separat handhabbare Baueinheit zur Verfügung steht, die den Aktuator und die Feststellvorrichtung beinhaltet.

Die Feststellvorrichtung, insbesondere die Betätigungsvorrichtung der Feststellvorrichtung, kann federelastisch beweglich an dem Aktuatorgehäuse befestigt sein. Insbesondere kann die Feststellvorrichtung, insbesondere die Betätigungsvorrichtung der Feststellvorrichtung, unmittelbar federelastisch beweglich an dem Aktuatorgehäuse befestigt sein. Vorzugsweise ist bei einer solchen Ausführung das Aktuatorgehäuse starr an einem der Gelenkgrundträger befestigt.

Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger direkt oder indirekt drehfest an ein Abtriebselement des Getriebes, das insbesondere ein Spannungswellengetriebe sein kann, angekoppelt ist. Die zwei mittels des motorisierten Gelenks beweglich verbundenen Träger können beispielsweise Teile eines Roboterarmes sein. Der Roboterarm kann mehrere erfindungsgemäße motorisierte Gelenke aufweisen.

Bei einer besonderen Ausführung ist das Gelenk dazu ausgebildet, zwei Träger eines programmierbareren Bewegungsautomaten derart zu verbinden, dass die Ebene, in der sich einer der Träger bewegt, und die Ebene, in der sich der andere Träger bewegt, stets parallel zueinander angeordnet sind. Bei einer anderen Ausführung ist das Gelenk dazu ausgebildet, zwei Träger eines programmierbaren Bewegungsautomaten derart zu verbinden, dass die Ebene, in der sich einer der Träger bewegt, und die Ebene, in der sich der andere Träger bewegt, stets senkrecht zueinander angeordnet sind. Bei einer anderen Ausführung ist das Gelenk als Torsionsgelenk oder als Translationsgelenk ausgebildet.

Besonders vorteilhaft kann das Gelenk als Scharniergelenk ausgebildet sein. Unter einem Scharniergelenk wird ein Gelenk verstanden, das eine Drehbewegung in, insbesondere ausschließlich, einem Freiheitsgrad zulässt.

Besonders vorteilhaft ist ein programmierbarer Bewegungsautomat, bei dem wenigstens einer der Träger als Roboterarmgehäuseteil ausgebildet ist. Eine solche Ausführung hat den besonderen Vorteil, dass der Träger außer seiner statischen Funktion auch noch die Funktion ausüben kann, weitere Bauteile einzuhausen.

Wie bereits erwähnt kann vorteilhaft vorgesehen sein, dass einer der Träger des programmierbaren Bewegungsautomaten mit einem der Gelenkgrundträger des motorisierten Gelenks fest verbunden ist, während der andere Träger des programmierbaren Bewegungsautomaten mit dem anderen der Gelenkgrundträger des motorisierten Gelenks fest verbunden ist. Alternativ kann auch einer der Gelenkgrundträger Bestandteil eines der Träger sein oder es kann einer der Gelenkgrundträger Bestandteil eines der Träger sein, während der andere Gelenkgrundträger Bestandteil des anderen Trägers ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines motorisierten Gelenks zum Verbinden von zwei relativ zueinander beweglichen Trägern,
- Fig. 2: ein zweites Ausführungsbeispiel eines motorisierten Gelenks zum Verbinden von zwei relativ zueinander befindlichen Trägern,
- Fig. 3: ein drittes Ausführungsbeispiel zum Verbinden von zwei relativ zueinander beweglichen Trägern,
- Fig. 4: ein viertes Ausführungsbeispiel eines motorisierten Gelenks zum Verbinden von zwei relativ zueinander beweglichen Trägern,
- Fig. 5: ein fünftes Ausführungsbeispiel eines motorisierten Gelenks zum Verbinden von zwei relativ zueinander beweglichen Trägern,
- Fig. 6: ein sechstes Ausführungsbeispiel eines motorisierten Gelenks zum Verbinden von zwei relativ zueinander beweglichen Trägern, und
- Fig. 7: eine Querschnittsansicht eines Details des sechsten Ausführungsbeispiels eines motorisierten Gelenks.

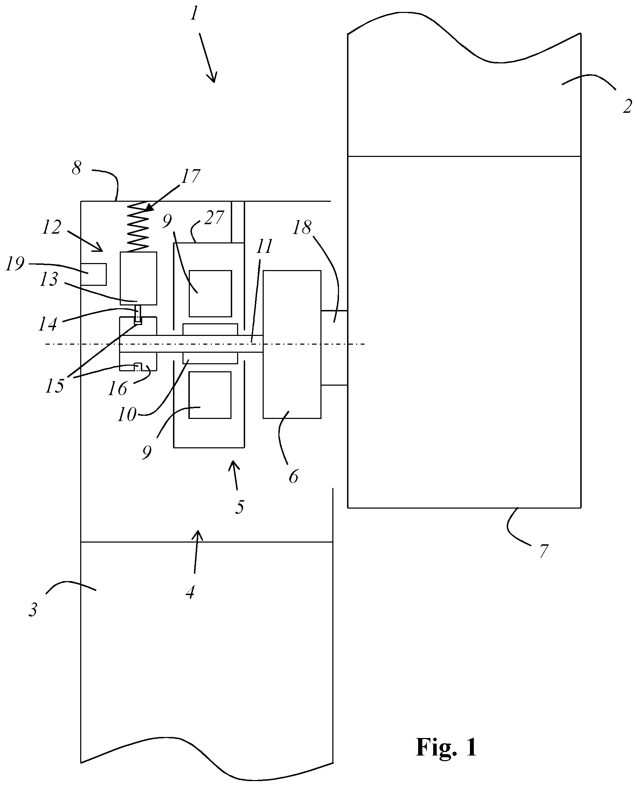

Figur 1 zeigt ein erstes Ausführungsbeispiel eines motorisierten Gelenks 1 zum gelenkigen Verbinden eines ersten Trägers 2 mit einem zweiten Träger 3 eines programmierbaren Bewegungsautomaten.

Das motorisierte Gelenk 1 weist einen Aktuator 4 mit einem Antriebsmotor 5 und einem Getriebe 6, das ein Spannungswellengetriebe sein kann, auf. Das Getriebe 6 ist dem Antriebsmotor 5 triebtechnisch nachgeschaltet.

Das motorisierte Gelenk 1 weist einen ersten Gelenkgrundträger 7 und einen zweiten Gelenkgrundträger 8 auf. Der erste Gelenkgrundträger 7 ist als Gehäuseteil ausgebildet und starr mit dem ersten Träger 2 verbunden, während der zweite Gelenkgrundträger 8 als Gehäuseteil ausgebildet starr mit dem zweiten Träger 3 verbunden ist. Es ist alternativ auch möglich, dass ein Gehäuse des ersten Trägers 2 zusätzlich auch als erster Gelenkgrundträger 7 des motorisierten Gelenks 1 fungiert und/oder dass ein Gehäuse des zweiten Trägers 3 zusätzlich auch als zweiter Gelenkgrundträger 8 des motorisierten Gelenks 1 fungiert.

Der Antriebsmotor 5 beinhaltet einen Stator 9 und einen Rotor 10. Der Rotor 10 ist drehfest mit einer Abtriebswelle 11 verbunden. Die Abtriebswelle 11 verbindet den Antriebsmotor 5 triebtechnisch mit dem nachgeschalteten Getriebe 6.

Ein Abtriebselement 18 des Getriebes 6 ist drehfest mit dem ersten Gelenkgrundträger 7 und somit starr und drehfest mit dem ersten Träger 2 verbunden.

Das motorisierte Gelenk 1 weist eine schaltbare Feststellvorrichtung 12 auf, die dazu ausgebildet und angeordnet ist, das motorisierte Gelenk 1 im zugeschalteten Zustand zu arretieren und in einem Freigabezustand nicht zu arretieren.

Die Feststellvorrichtung 12 umfasst eine Betätigungsvorrichtung 13 und ein mittels der Betätigungsvorrichtung 13 bewegliches Wirkmittel 14, welches im zugeschalteten Zustand in formschlüssigem Eingriff mit einem Gegenwirkmittel 15 eines Sperrmittels 16 steht und im Freigabezustand mit dem Gegenwirkmittel 15 nicht in Eingriff steht. Das Sperrmittel 16 ist drehfest mit der Abtriebswelle 11 verbunden und weist auf seiner Umfangsfläche mehrere als Ausnehmungen ausgebildete Gegenwirkmittel 15 auf. Die Betätigungsvorrichtung 13 kann einen (nicht näher dargestellten) elektrischen Elektromagneten beinhalten, mittels dem das als Sperrenstift ausgebildete Wirkmittel 14 zur Bewegung angetrieben werden kann.

Die Betätigungsvorrichtung 13 der Feststellvorrichtung 12 ist mittels einer Federvorrichtung 17 federelastisch beweglich an dem zweiten Gelenkgrundträger 8 befestigt.

An dem zweiten Gelenkgrundträger 8 ist außerdem ein Sensor 19 befestigt, der eine Bewegung der Betätigungsvorrichtung 13 der Feststellvorrichtung 12 relativ zu dem zweiten Gelenkgrundträger 8 detektiert. Der Sensor 19 kann beispielsweise als optischer Drehwinkelsensor ausgebildet sein.

Das Antriebsmotorgehäuse 27 des Antriebsmotors 5 ist drehfest an dem zweiten Gelenkgrundträger 8 befestigt. Der Stator 9 ist ortsfest in dem Antriebsmotorgehäuse 27 angeordnet.

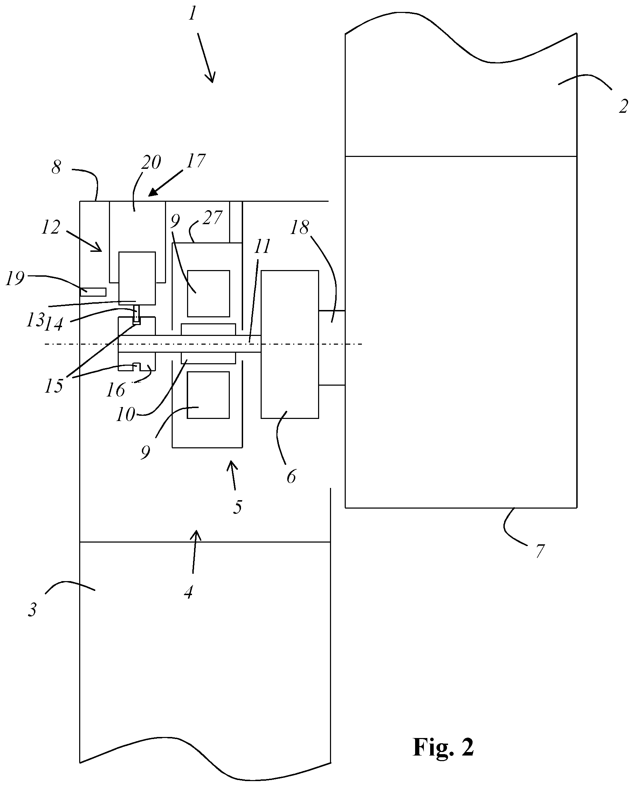

Fig. 2 zeigt ein zweites Ausführungsbeispiel eines motorisierten Gelenks 1 zum gelenkigen Verbinden eines ersten Trägers 2 mit einem zweiten Träger 3 eines programmierbaren Bewegungsautomaten.

Das zweite Ausführungsbeispiel unterscheidet sich von dem ersten Ausführungsbeispiel in der Ausführung der Befestigung der Feststellvorrichtung 12. Bei dem zweiten Ausführungsbeispiel ist ein Gehäuse der Betätigungsvorrichtung 13 der Feststellvorrichtung 12 in einem Elastomer-Körper 20 formschlüssig gehaltert, um die Betätigungsvorrichtung 13 federelastisch beweglich zu befestigen. Der Elastomer-Körper 20 umgibt einen Teil des Gehäuses der Feststellvorrichtung formschlüssig und ist an dem zweiten Gelenkgrundträger 8 befestigt.

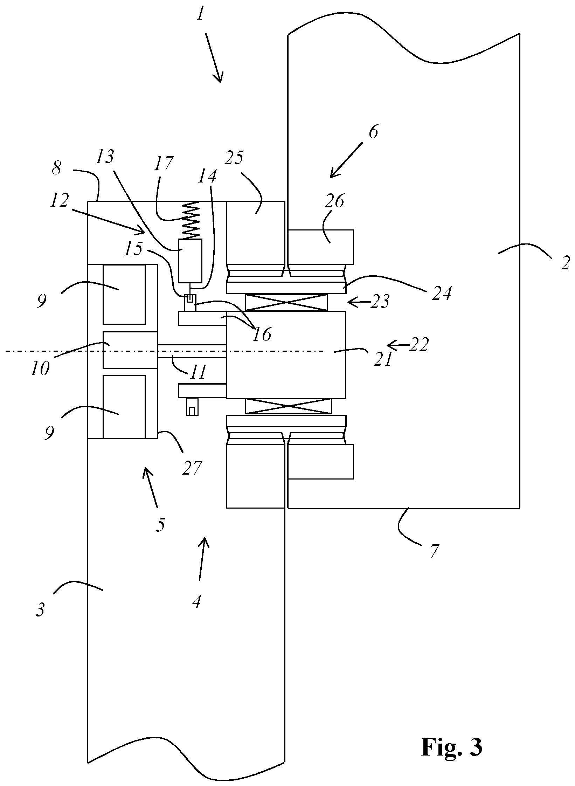

Figur 3 zeigt ein drittes Ausführungsbeispiel eines motorisierten Gelenks 1 zum gelenkigen Verbinden eines ersten Trägers 2 mit einem zweiten Träger 3 eines programmierbaren Bewegungsautomaten.

Das motorisierte Gelenk 1 weist einen Aktuator 4 mit einem Antriebsmotor 5, mit einem als Ringgetriebe ausgebildeten Spannungswellengetriebe 6, das dem Antriebsmotor 5 triebtechnisch nachgeschaltet ist, auf.

Das motorisierte Gelenk 1 weist einen ersten Gelenkgrundträger 7 und einen zweiten Gelenkgrundträger 8 auf. Der erste Gelenkgrundträger 7 ist als Gehäuseteil ausgebildet und starr mit dem ersten Träger 2 verbunden, während der zweite Gelenkgrundträger 8 als Gehäuseteil ausgebildet starr mit dem zweiten Träger 3 verbunden ist. Es ist alternativ auch möglich, dass ein Gehäuse des ersten Trägers 2 zusätzlich auch als erster Gelenkgrundträger 7 des motorisierten Gelenks 1 fungiert und/oder dass ein Gehäuse des zweiten Trägers 3 zusätzlich auch als zweiter Gelenkgrundträger 8 des motorisierten Gelenks 1 fungiert.

Der Antriebsmotor 5 beinhaltet einen Stator 9 und einen Rotor 10. Der Rotor 10 ist drehfest mit einer Abtriebswelle 11 verbunden. Die Abtriebswelle 11 verbindet den Antriebsmotor 5 triebtechnisch mit dem ovalen Antriebskern 21 eines Wellengenerators 22 des Spannungswellengetriebes 6.

Der Wellengenerator 22 weist ein radialflexibles Wälzlager 23 auf. Mittels des radialflexiblen Wälzlagers 23 ist der ovale Antriebskern 21 in einer radialflexiblen, außenverzahnten Hülse 24 (Flexspline) rotierbar gelagert. Der ovale Antriebskern 21 überträgt seine ovale Form über das radialflexible Wälzlager 23 auf die radialflexible außenverzahnte Hülse 24, die auf einander gegenüberliegenden Seiten entlang der Hochachse des Ovals in Zahneingriff mit einem ersten, starren, innenverzahnten Stützring 25 (Dynamicspline) steht. Der erste Stützring 25 ist über den zweiten Gelenkgrundträger 8 drehfest mit dem zweiten Träger 3 verbunden. Der erste Stützring 25 kann insbesondere dieselbe Zähnezahl aufweisen, wie die radialflexible außenverzahnte Hülse 24.

Darüber hinaus weist das Getriebe 6 einen zweiten starren, innenverzahnten Stützring 26 (Circularspline) auf, der ebenfalls in Zahneingriff mit der radialflexiblen außenverzahnten Hülse 24 steht. Der zweite Stützring 26 weist eine höhere Anzahl von Zähnen auf, als die radialflexible außenverzahnte Hülse 24, so dass es bei einer Rotation des Antriebskerns 21 automatisch zu einer Relativdrehung des zweiten Stützrings 26 relativ zu der radialflexiblen außenverzahnten Hülse 24 kommt.

Der zweite Stützring 26, der als Getriebeabtrieb fungiert, ist mit dem ersten Gelenkgrundträger 7 des ersten beweglichen Trägers 2 verbunden.

Das Antriebsmotorgehäuse 27 des Antriebsmotors 5 ist drehfest an dem zweiten Gelenkgrundträger 8 befestigt. Der Stator 9 ist ortsfest in dem Antriebsmotorgehäuse 27 angeordnet.

Das motorisierte Gelenk 1 weist eine schaltbare Feststellvorrichtung 12 auf, die dazu ausgebildet und angeordnet ist, das motorisierte Gelenk 1 im zugeschalteten Zustand zu arretieren und in einem Freigabezustand nicht zu arretieren.

Die Feststellvorrichtung 12 umfasst eine Betätigungsvorrichtung 13 und ein mittels der Betätigungsvorrichtung 13 bewegliches Wirkmittel 14, welches im zugeschalteten Zustand in formschlüssigem Eingriff mit einem Gegenwirkmittel 15 eines Sperrmittels 16 steht und im Freigabezustand mit dem Gegenwirkmittel 15 nicht in Eingriff steht. Das Sperrmittel 16 ist drehfest mit dem Antriebskern 21 des Wellengenerators 22 verbunden und weist auf seiner Umfangsfläche mehrere als Ausnehmungen ausgebildete Gegenwirkmittel 15 auf. Die Betätigungsvorrichtung 13 kann einen (nicht näher dargestellten) elektrischen Elektromagneten beinhalten, mittels dem das als Sperrenstift ausgebildete Wirkmittel 14 zur Bewegung angetrieben werden kann.

Die Betätigungsvorrichtung 13 der Feststellvorrichtung 12 ist mittels einer Federvorrichtung 17 federelastisch beweglich an dem zweiten Gelenkgrundträger 8 befestigt.

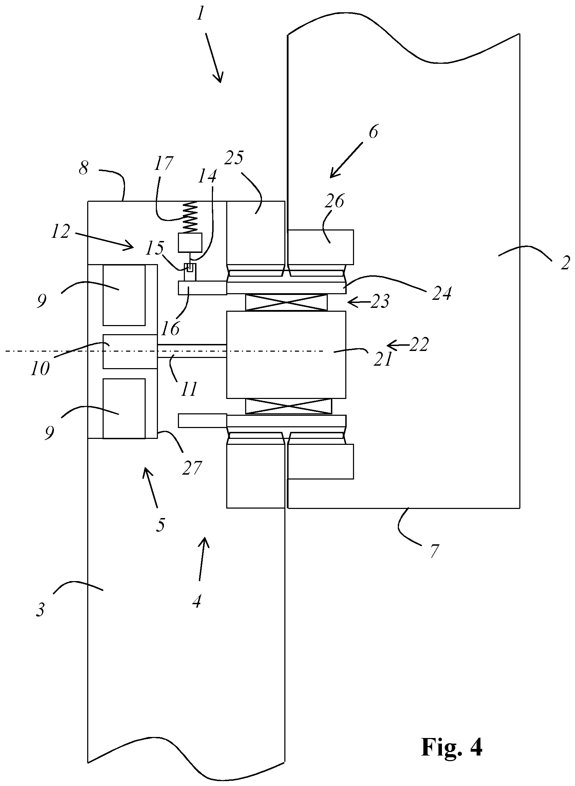

Figur 4 zeigt ein viertes Ausführungsbeispiel eines motorisierten Gelenks 1 zum gelenkigen Verbinden eines ersten Trägers 2 mit einem zweiten Träger 3 eines programmierbaren Bewegungsautomaten.

Im Unterschied zu dem dritten Ausführungsbeispiel ist bei dem vierten Ausführungsbeispiel das Sperrmittel 16 drehfest mit der radialflexiblen außenverzahnten Hülse 24 (Flexspline) verbunden.

Außerdem sind die Gelenkgrundträger 7, 8 gemeinsam einstückig mit den Trägern 2, 3 des programmierbaren Bewegungsautomaten ausgebildet.

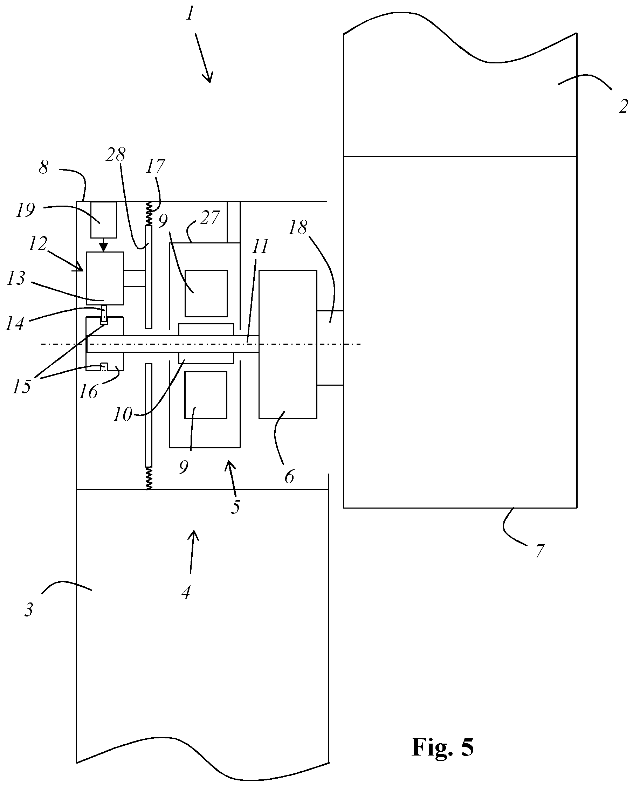

Figur 5 zeigt ein fünftes Ausführungsbeispiel eines motorisierten Gelenks 1 zum gelenkigen Verbinden eines ersten Trägers 2 mit einem zweiten Träger 3 eines programmierbaren Bewegungsautomaten.

Das fünfte Ausführungsbeispiel unterscheidet sich von dem ersten Ausführungsbeispiel dadurch, dass die Betätigungsvorrichtung 13 der Feststellvorrichtung 12 Teil eines Zwischenbauteils 28 ist, welches seinerseits an dem zweiten Gelenkgrundträger 8 mittels einer Federvorrichtung 17 federelastisch beweglich befestigt ist. Das Zwischenbauteil 17 kann als eine Platine ausgebildet sein, die (nicht dargestellte) elektrische und/oder elektronische Bauteile, insbesondere elektrische und/oder elektronische Bauteile zur Steuerung des Antriebsmotors und/oder der Feststellvorrichtung trägt.

An dem zweiten Gelenkgrundträger 8 ist außerdem ein Sensor 19 befestigt, der eine Bewegung der Betätigungsvorrichtung 13 der Feststellvorrichtung 12 relativ zu dem zweiten Gelenkgrundträger 8 detektiert.

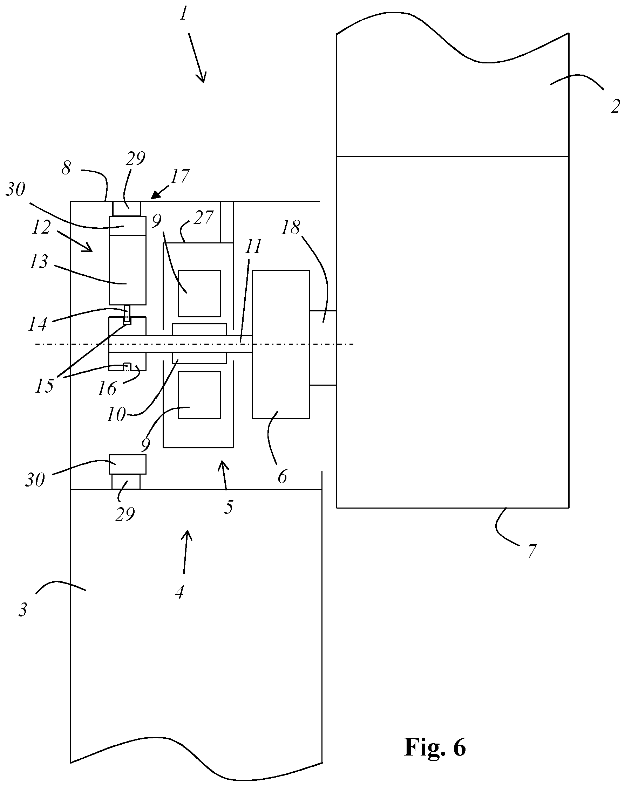

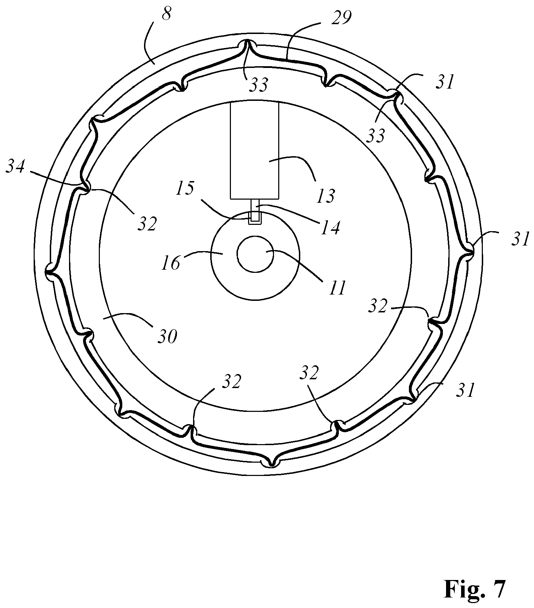

Die Figuren 6 und 7 zeigen ein sechstes Ausführungsbeispiel eines motorisierten Gelenks zum Verbinden von zwei relativ zueinander beweglichen Trägern, das im Wesentlichen ähnlich aufgebaut ist, wie das erste Ausführungsbeispiel.

Das sechste Ausführungsbeispiel eines motorisierten Gelenks weist eine besondere federelastische Befestigung der Feststellvorrichtung 12 auf. Die federelastische Befestigung beinhaltet eine Federvorrichtung 17 in Form eines gezackten Federrings 29, der radial nach innen gerichtete Zacken 34 und radial nach außen gerichtete Zacken 33 aufweist. Die radial nach außen gerichtete Zacken 33 greifen in Einbuchtungen 31 des Gehäuses 8 ein, während die radial nach innen gerichtete Zacken 34 in Einbuchtungen 32 eines Halterings 30 eingreifen. An dem Haltering 30 ist die Betätigungsvorrichtung 13 der Feststellvorrichtung 12 angeordnet.

Auch bei dieser Ausführung können die Träger 2, 3, die mittels des erfindungsgemäßen motorisierten Gelenks miteinander verbunden sind, auch nach einem Umschalten der Feststellvorrichtung 12 in den zugeschalteten Zustand durch Aufwendung einer äußeren Kraft in begrenztem Umfang relativ zueinander beschädigungsfrei elastisch bewegt werden. Hierbei werden die radial nach innen gerichteten Zacken 34 radial nach außen bewegt, während die radial nach außen gerichteten Zacken 33 radial nach innen bewegt werden, wobei die Flanken der Einbuchtungen 32 als Anlaufschrägen fungieren.

Wenn ein insbesondere durch die Ausführung (insb. Material, Dicke, axiale Länge, Form usw.) des gezackten Federrings 29 vorgegebenes Drehmoment überschritten wird, geraten die radial nach innen gerichteten Zacken 34 und/oder die radial nach außen gerichteten Zacken 33 außer Eingriff mit der Folge, dass ein weitergehendes Bewegen der Träger 2, 3 ermöglicht ist, wobei die Betätigungsvorrichtung 13 samt dem Haltering 30 relativ zu dem Gehäuse rotieren kann und der Federring 29 hierbei als reibschlüssiges Bremselement zwischen Haltering 30 und dem Gehäuse 8 fungiert; zumindest bis die Zacken 33, 34 in die jeweils benachbarten Einbuchtungen 31, 32 einrasten.

### Bezugszeichenliste:

- 1: Motorisiertes Gelenk
- 2: Erster Träger
- 3: Zweiter Träger
- 4: Aktuator
- 5: Antriebsmotor
- 6: Getriebe
- 7: Erster Gelenkgrundträger
- 8: Zweiter Gelenkgrundträger
- 9: Stator
- 10: Rotor
- 11: Abtriebswelle
- 12: Feststellvorrichtung
- 13: Betätigungsvorrichtung
- 14: Wirkmittel
- 15: Gegenwirkmittel
- 16: Sperrmittel
- 17: Federvorrichtung
- 18: Abtriebselement
- 19: Sensor
- 20: Elastomer-Körper
- 21: Antriebskern
- 22: Wellengenerator
- 23: radialflexibles Wälzlager
- 24: radialflexible außenverzahnte Hülse
- 25: erster Stützring
- 26: zweiter Stützring
- 27: Antriebsmotorgehäuse
- 28: Zwischenbauteil
- 29: Gezackter Federring
- 30: Haltering
- 31: Einbuchtung des Gehäuses 8
- 32: Einbuchtung des Halterings 30
- 33: Zacken
- 34: Zacken

## Patentansprüche

1. Motorisiertes Gelenk (1) zum Verbinden von zwei relativ zueinander beweglichen Trägern (2, 3) eines programmierbaren Bewegungsautomaten, das eine schaltbare Feststellvorrichtung (12) aufweist, die dazu ausgebildet und angeordnet ist, das motorisierte Gelenk (1) im zugeschalteten Zustand zu arretieren und in einem Freigabezustand nicht zu arretieren, **dadurch gekennzeichnet, dass** die Feststellvorrichtung (12), insbesondere in Tangentialrichtung, federelastisch beweglich befestigt ist.

2. Motorisiertes Gelenk (1) nach Anspruch 1, **gekennzeichnet durch** zwei Gelenkgrundträger (7, 8), die beweglich, insbesondere dreh- oder schwenkbeweglich, miteinander verbunden sind.

3. Motorisiertes Gelenk (1) nach Anspruch 2, **dadurch gekennzeichnet, dass** das motorisierte Gelenk wenigstens eines der nachfolgenden Merkmale a bis c aufweist:
a. die Feststellvorrichtung (12) ist direkt oder indirekt an einem der Gelenkgrundträger (7, 8) federelastisch beweglich ,
b. einer der Gelenkgrundträger (7, 8) ist wenigstens teilweise als Gehäuseteil ausgebildet ist oder beide Gelenkgrundträger (7, 8) sind wenigstens teilweise jeweils als Gehäuseteile ausgebildet,
c. wenigstens einer der Gelenkgrundträger (7, 8) ist zur Ankopplung eines Trägers (2, 3) eines programmierbaren Bewegungsautomaten ausgebildet ist oder dass wenigstens einer der Gelenkgrundträger (7, 8) gemeinsam einstückig mit einem Träger (2, 3) eines programmierbaren Bewegungsautomaten ausgebildet.

4. Motorisiertes Gelenk (1) nach einem der Ansprüche 1 bis 3, **dadurch gekennzeichnet, dass** die Feststellvorrichtung (12) eine Betätigungsvorrichtung (13) und ein mittels der Betätigungsvorrichtung (13) bewegliches Wirkmittel (17), insbesondere ein linear verschiebbarer Sperrenstift oder eine schwenkbar gelagerte Klinke, aufweist, welches im zugeschalteten Zustand in formschlüssigem oder reibschlüssigem Eingriff mit einem Gegenwirkmittel (15), insbesondere einer Ausnehmung, steht und im Freigabezustand mit dem Gegenwirkmittel (15) nicht in Eingriff steht.

5. Motorisiertes Gelenk (1) nach einem der Ansprüche 1 bis 4, **gekennzeichnet durch**
a. einen Aktuator (4), der einen Antriebsmotor (5) und ein dem Antriebsmotor (5) triebtechnisch nachgeschaltetes Getriebe (6), insbesondere ein Spannungswellengetriebe, beinhaltet, oder durch
b. einen Aktuator (4), der einen Antriebsmotor (5) und ein dem Antriebsmotor (5) triebtechnisch nachgeschaltetes Getriebe (6), insbesondere ein Spannungswellengetriebe, beinhaltet, wobei die Gelenkgrundträger (7, 8) mittels des Aktuators (4) relativ zueinander motorisch bewegbar sind.

6. Motorisiertes Gelenk (1) nach einem der Ansprüche 2 bis 5, **dadurch gekennzeichnet, dass**
a. ein Gelenkgrundträger (7, 8) direkt oder indirekt drehfest mit einem Getriebebauteil des Getriebes (6) verbunden ist und dass der andere Gelenkgrundträger (7, 8) direkt oder indirekt drehfest mit einem anderen Getriebebauteil des Getriebes (6) verbunden ist, oder dass
b. ein Gelenkgrundträger (7, 8) direkt oder indirekt drehfest mit einem Antriebsmotorgehäuse (27) des Antriebsmotors (5) verbunden ist und dass der andere Gelenkgrundträger (7, 8) direkt oder indirekt drehfest mit einem anderen Getriebebauteil des Getriebes (6) verbunden ist.

7. Motorisiertes Gelenk (1) nach Anspruch 5 oder 6, **dadurch gekennzeichnet, dass** das motorisierte Gelenk wenigstens eines der nachfolgenden Merkmale a bis c aufweist:
a. das Gegenwirkmittel (15) ist direkt oder indirekt an einem Getriebebauteil des Getriebes (6) ausgebildet oder das Gegenwirkmittel (15) ist direkt oder indirekt an einer Abtriebswelle (11) des Antriebsmotors (5) ausgebildet,
b. ein starr mit einem Getriebebauteil des Getriebes (6) oder mit einer Abtriebswelle (11) des Antriebsmotors (5) verbundenes Sperrmittel (16) weist das Gegenwirkmittel (15) auf,
c. ein Stator (9) des Antriebsmotors (5) stützt sich direkt oder indirekt an einem der Gelenkgrundträger (7, 8) ab und die Feststellvorrichtung (12), insbesondere die Betätigungsvorrichtung (13) der Feststellvorrichtung, stützt sich im zugeschalteten Zustand federelastisch an demselben Gelenkgrundträger (7, 8) ab.

8. Motorisiertes Gelenk (1) nach einem der Ansprüche 1 bis 7, **dadurch gekennzeichnet, dass** das motorisierte Gelenk wenigstens eines der nachfolgenden Merkmale a bis c aufweist:
a. die Feststellvorrichtung (12) ist Teil eines Zwischenbauteils (28), welches seinerseits federelastisch beweglich befestigt ist,
b. die Feststellvorrichtung (12) ist Teil eines Zwischenbauteils, das als eine Platine ausgebildet ist, die elektrische und/oder elektronische Bauteile, insbesondere elektrische und/oder elektronische Bauteile zur Steuerung des Antriebsmotors (5) und/oder der Feststellvorrichtung (12), trägt,
c. die Feststellvorrichtung (12) ist Teil eines Zwischenbauteils, das als eine Platine ausgebildet ist, die elektrische und/oder elektronische Bauteile, insbesondere elektrische und/oder elektronische Bauteile zur Steuerung des Antriebsmotors (5) und/oder der Feststellvorrichtung (12), trägt, wobei zu der Platine und/oder zu den elektrischen und/oder elektronischen Bauteilen verlaufende elektrische Leitungen flexibel ausgebildet sind.

9. Motorisiertes Gelenk (1) nach einem der Ansprüche 1 bis 8, **dadurch gekennzeichnet, dass**
a. die Feststellvorrichtung (12) mittels einer Federvorrichtung (17) direkt oder indirekt federelastisch beweglich befestigt ist, oder dass
b. die Feststellvorrichtung (12) gegen eine Rückstellkraft der Federvorrichtung (17) in Tangentialrichtung federelastisch beweglich ist.

10. Motorisiertes Gelenk (1) nach Anspruch 9, **dadurch gekennzeichnet, dass** das motorisierte Gelenk wenigstens eines der nachfolgenden Merkmale a bis c aufweist:
a. die Federvorrichtung (17) beinhaltet wenigstens eine metallische Feder,
b. die Federvorrichtung (17) beinhaltet eine nichtmetallische Feder, insbesondere eine Luftfeder oder eine Elastomerfeder oder eine Gasdruckfeder,
c. die Federvorrichtung (17) weist einen ersten Ankoppelabschnitt auf, der starr mit der Feststellvorrichtung, insbesondere mit der Betätigungsvorrichtung (13) der Feststellvorrichtung, verbunden ist, und weist einen zweiten Ankoppelabschnitt auf, der starr mit einem der Gelenkgrundträger (7, 8) verbunden ist.

11. Motorisiertes Gelenk (1) nach einem der Ansprüche 4 bis 10, **dadurch gekennzeichnet, dass**
a. die Betätigungsvorrichtung (13) der Feststellvorrichtung (12) in Tangentialrichtung federelastisch beweglich, insbesondere an einem der Gelenkgrundträger (7, 8), befestigt ist, und/oder dass
b. die Betätigungsvorrichtung (13) der Feststellvorrichtung (12), insbesondere an einem der Gelenkgrundträger (7, 8), in Radialrichtung und/oder in Axialrichtung unbeweglich befestigt ist.

12. Motorisiertes Gelenk (1) nach einem der Ansprüche 1 bis 11, **dadurch gekennzeichnet, dass** das motorisierte Gelenk wenigstens eines der nachfolgenden Merkmale a und b aufweist:
a. die Feststellvorrichtung (12) ist als reibschlüssige Bremse ausgebildet oder weist eine reibschlüssige Bremse auf,
b. ein Sensor (19), insbesondere ein Drehwinkelsensor, detektiert eine federelastische Bewegung der Feststellvorrichtung, insbesondere eine Bewegung der Betätigungsvorrichtung (13) der Feststellvorrichtung (12), relativ zu einem anderen Bauteil des motorisierten Gelenks (1), insbesondere relativ zu einem der Gelenkgrundträger (7, 8).

13. Motorisiertes Gelenk (1) nach einem der Ansprüche 5 bis 12, **dadurch gekennzeichnet, dass**
a. der Aktuator (4) ein Aktuatorgehäuse aufweist und dass die Feststellvorrichtung (12) in dem Aktuatorgehäuse angeordnet ist, und/oder dass
b. der Aktuator (4) ein Aktuatorgehäuse aufweist, wobei die Feststellvorrichtung (12), insbesondere die Betätigungsvorrichtung (13) der Feststellvorrichtung (12), federelastisch beweglich an dem Aktuatorgehäuse befestigt ist.

14. Motorisiertes Gelenk (1) nach einem der Ansprüche 1 bis 13, **dadurch gekennzeichnet, dass**
a. das motorisierte Gelenk (1) dazu ausgebildet ist, zwei Träger (2, 3) derart zu verbinden, dass die Ebene in der sich einer der Träger bewegt und die Ebene in der sich der andere Träger (2, 3) bewegt stets parallel zueinander angeordnet sind, oder dass
b. das motorisierte Gelenk (1) als Scharniergelenk ausgebildet ist, oder dass
c. das motorisierte Gelenk (1) dazu ausgebildet ist, zwei Träger (2, 3) derart zu verbinden, dass die Ebene in der sich einer der Träger (2, 3) bewegt und die Ebene in der sich der andere Träger (2, 3) bewegt stets senkrecht zueinander angeordnet sind, oder dass
d. das motorisierte Gelenk (1) als Torsionsgelenk ausgebildet ist, oder dass
e. das motorisierte Gelenk (1) als Translationsgelenk ausgebildet ist.

15. Programmierbarer Bewegungsautomat mit zwei mittels eines motorisierten Gelenks (1) nach einem der Ansprüche 1 bis 14 relativ zueinander beweglich verbundenen Trägern (2, 3), wobei der programmierbare Bewegungsautomat vorteilhaft zusätzlich wenigstens eines der nachfolgenden Merkmale a bis f aufweisen kann:
a. einer der Träger (2, 3) ist direkt oder indirekt drehfest mit einem Stator (9) des Antriebsmotors (5) und/oder einem Antriebsmotorgehäuse (27) des Antriebsmotors (5) verbunden und der andere Träger (2, 3) ist drehfest an das Abtriebselement (18) des Getriebes (6) angekoppelt,
b. die zwei mittels des motorisierten Gelenks (1) beweglich verbundenen Träger (2, 3) sind Teil eines Roboterarmes,
c. wenigstens einer der Träger (2, 3) ist als Roboterarmgehäuseteil ausgebildet,
d. einer der Träger (2, 3) ist mit einem der Gelenkgrundträger (7, 8) fest verbunden und der andere Träger (2, 3) ist mit dem anderen der Gelenkgrundträger (7, 8) fest verbunden,
e. einer der Gelenkgrundträger (7, 8) ist Bestandteil eines der Träger (2, 3),
f. einer der Gelenkgrundträger (7, 8) ist Bestandteil eines der Träger (2, 3) und der andere Gelenkgrundträger (7, 8) ist Bestandteil des anderen Trägers (2, 3).
